# EUROPEAN PATENT APPLICATION

(11) **EP 3 586 687 A1**
(43) Date of publication of application: **01.01.2020**
(21) Application number: 18179481.9
(22) Date of filing: 25.06.2018
(51) Int. Cl.: A47J 19/02, A23N 1/00

(54) **A JUICER AND A JUICING METHOD**

(71) Applicant: Koninklijke Philips N.V., 5656 AE Eindhoven (NL)
(72) Inventor: OTTI, Thomas, 5656 AE Eindhoven (NL)
(74) Representative: de Haan, Poul Erik

(57) **Abstract**

A juicer comprises a centrifuge drum (10) for generating clear juice (22) and sediment (18). Output juice (22) is delivered from the centrifuge drum (10) from a radial position which is between the central axis of rotation (12) and the drum outer wall (35). The output is controllable so that a user-selectable ratio of clear juice and sediment is delivered.

## Description

### FIELD OF THE INVENTION

This invention relates to juicers.

### BACKGROUND OF THE INVENTION

Healthy fruit (and/or vegetable) drinks are increasingly popular, and many different types of kitchen appliance are available for blending and/or juicing to create these drinks.

Different ingredients will give rise to different consistencies. The consistencies may be categorized as mousse, thick smoothie, thin smoothie, fibrous juice and clear juice.

Juicers, and more generally food processors, blenders, masticators, smoothie makers and other kitchen devices, produce beverages with one or two of these categories of consistency depending on the fruit or vegetable.

For example, blenders and smoothie makers generally produce mousse or thick smoothies because they keep all fibers in the beverage. By adding additional fluids like water or milk, the consistency can be changed to a thin smoothie or even a fibrous juice for some fruits. A disadvantage of this process is that the beverage is often tasteless because of the dilution.

Masticators and centrifugal juicers generally produce mainly clear and fibrous juice consistencies by separating solid and liquid contents of the fruit or vegetables by the use of sieves and meshes. The consistency is strongly dependent on the fruit and device type. Some devices are also capable of producing smoothies as a second device setting.

The consistency of the beverage mainly depends on the amount of solids (fibers) in the specific fruit or vegetable e.g. cellulose and on the processing principle.

Most existing products offer one or at most two consistency settings (e.g. clear juice and fibrous juice). Most existing kitchen devices are also limited to some fruit and vegetable types which match the device process.

One known way to provide a more selectable consistency is to use a so-called peeling tube, which is inserted into a centrifuge drum to a controllable depth. Juice of selectable thickness is then delivered by the kinetic energy of the centrifuge rotation. However, this is difficult to control and results in a complex appliance.

It would be desirable to be able to produce fresh juice from fruits and vegetables with the option to freely choose the consistency of the beverage for every fruit or vegetable, according to personal taste preferences or health needs (for example a need for dietary fibers). There is a need for this flexibility in an appliance which is simple to manufacture and simple to use.

### SUMMARY OF THE INVENTION

The invention is defined by the claims.

According to examples in accordance with an aspect of the invention, there is provided a juicer, comprising:
a centrifuge unit for generating clear juice and sediment from a foodstuff to be juiced, the centrifuge unit comprising a drum having a central axis of rotation, a radial outer wall, a base and a lid; and
an output arrangement comprising a mixture input at a radial position offset from the outer wall,
wherein the output arrangement is controllable to deliver a user-selectable ratio of clear juice and sediment in the output juice.

This juicer is able to provide a controllable juice characteristic, by controlling the centrifuge process before the juice is extracted from the output arrangement, or by controlling the output arrangement itself. The output arrangement has a mixture input at a location between the central axis of rotation, where clear juice will be present, and the radial outer wall, where sediment will collect. The mixture input defines the spatial position from which the contents of the drum are extracted and provided as the output from the juicer.

Note that the user-selectable ratio does not need to be a ratio as such. Instead, as far as the user is concerned, the selection is of a level of cloudiness. There may be a set of three, four or five levels, for example, between very clear/thin and very cloudy/thick.

In one example, the duration and/or speed of the centrifuge process is used to determine the consistency of the juice before it is released from the output arrangement. The control of the output arrangement may then simply comprise opening the output arrangement. In this way, a user may select a desired level of cloudiness or pulp content of the extracted juice. The juicer may then set the activation time for the output arrangement. This setting of the activation time for example takes account not only of the desired level of cloudiness, but also the fruit type, the amount being processed, the rotational speed, the recipe being followed etc.

In another example, the location from which the output arrangement releases juice may be adjusted, again so that a user may select a desired level of cloudiness or pulp content of the extracted juice.

In another example, the amount of sediment reaching the output arrangement may be controlled by adjusting the dimensions of the drum.

Note that the term "sediment" is intended to refer to any solid or particulate content.

By using a centrifugal drum and a sedimentation process instead of a commonly used filter system, the juicer is very easy to clean, because of the simple design of the centrifugal drum.

The invention in this way provides a single device which is able to generate all of the consistencies discussed above, by suitable control of the device.

The juicer may further comprise a rotary cutter, comprising a knife or shredder. This is used to perform an initial breaking up of a foodstuff (typically fruit or vegetable) before juice extraction by the centrifuge.

The juicer for example comprises a motor arrangement for driving the centrifuge unit and the rotary cutter independently.

The cutting and juicing operations may thus be controlled independently, i.e. at different times and/or speeds. Thus, each operation may be optimized.

The drum is for example adapted to rotate about an upright axis in use. This provides a compact arrangement, in which foodstuff may be loaded into the juicer from above. The centrifuge operation displaces the solid content radially outwardly, i.e. laterally, where it is collected for removal.

The output arrangement may comprise a valve arrangement. This provides a way to control the flow through the output arrangement.

The valve arrangement is for example controlled by centrifugal forces, and the speed of rotation of the centrifuge unit is controllable thereby to provide control of the valve arrangement.

In this way, control signals do not need to be sent to the valve arrangement. Instead, the speed of rotation of the centrifuge is used as a control parameter. For example, the valve arrangement may comprise a spring closed valve, wherein the spring force is overcome at a certain rotational speed. The normal centrifuge function may take place with the valve arrangement closed, and after this process, the valve can be opened at a selectable time (and for a selectable time period) by increasing the centrifuge speed at that time.

The output arrangement may comprise a plurality of mixture inputs at the same radial distance from the axis of rotation. The use of a plurality of mixture inputs enables a balanced system to be provided. In particular, when each mixture input is associated with a control valve (as explained above), this enables the drum (including the control valves) to be rotationally balanced. When valves are provided, there is a valve for each mixture input of the output arrangement.

A first set of examples makes use of a static position of the valve arrangement, at a single radial position.

In a second set of examples, the output arrangement may have an adjustable radial position. In this way, the mixture of juice and sediment may be selected based on the position of the output arrangement between the central axis and the outer wall. In this way, the centrifuge operation does not need to be controlled accurately to achieve a desired juice consistency.

In a third set of examples, the output arrangement may comprise a plurality of mixture inputs at different radial positions, wherein different mixture inputs or combinations of mixture inputs are selectable.

The different mixture inputs may for example be selectable by having outlet valves which are activated at different rotational speeds. In this case, one valve after another may be activated by increasing the rotational speed. Starting at the valve closest to the central axis, higher rotational speeds may be used to open valves progressively closer to the outer wall, and thereby more sediment will be included in the extracted juice.

In a fourth set of examples, the distance between the base and the lid is adjustable to provide the control of the ratio of clear juice and sediment. This may be used with a fixed radial position of the output arrangement.

This is an alternative way to control the ratio of juice and sediment. The height of the centrifuge (i.e. the base to lid distance) determines how much sediment can fit into an annular outer region. Thus, with a smaller height, more sediment will be released from an output arrangement at a given radial position. Thus, the amount of sediment is controlled by setting the position of the base or lid.

The adjustment of the height may take place after the centrifuge (sedimentation) process is complete but with the centrifuge still operating. After the sedimentation process, by reducing the drum height e.g. by pushing down the lid, first the radial liquid level will rise (i.e. advance radially towards the rotation axis) and clear juice will flow out where that liquid level passes the output arrangement. The further the lid is pushed downwards also the radial sediment level will rise and more of the sediment will exit the centrifuge unit. The degree by which the height of the drum is adjusted thus controls the character of the output juice. The control can also take account of different amounts of ingredient being juiced, in that the user can make adjustment until the desired juice consistency is observed.

The invention also provides a juicing method using a juicing appliance, comprising:
performing centrifuging using a centrifuge unit to generate clear juice and sediment from a foodstuff to be juiced, the centrifuge unit comprising a drum having a central axis of rotation, a radial outer wall, a base and a lid; and
delivering output juice from the centrifuge unit which comprises a mixture of clear juice and sediment, wherein the output arrangement has a mixture input which is offset from the radial outer wall,
wherein the method comprises controlling the output arrangement to deliver a user-selectable ratio of clear juice and sediment in the output juice.

This method enables a user to select a desired juice consistency, and may be achieved with a simple and easy to use appliance.

The method preferably comprises performing cutting or shredding before performing centrifuging. This enables the appliance to perform the full processing from a bare ingredient to the desired juice.

Controlling the output arrangement may comprise controlling a speed of rotation of the centrifuge unit, thereby to provide control of a valve which is actuated based on centrifugal forces. This gives the valve a simple design, requiring no electrical connections for example, and the control of the valve may be implemented remotely by controlling the rotation speed.

The method then comprises operating the centrifuge unit at a first speed to perform a centrifuge function with the valve closed, and then operating the centrifuge unit at a higher second speed to perform a valve opening function and release the output juice.

Controlling the output arrangement may instead comprise setting a distance between the base and the lid of the centrifuge unit.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a known tubular centrifuge;
Figure 2 shows the centrifuge of Figure 1 in cross section perpendicular to the rotation axis;
Figure 3 shows a first example of a juicer in accordance with the invention;
Figure 4 shows that there may the three outlet openings instead of the two shown in Figure 3;
Figure 5 shows a more detailed diagram of the system of Figure 3;
Figure 6 shows an example of the base of the centrifuge unit to show a valve arrangement;
Figure 7 shows a valve in enlarged form;
Figure 8 shows how the juicer of Figures 5 to 7 may be operated, and shows the rotational speed versus time;
Figure 9 shows the overall juicing process in schematic form;
Figures 10A and 10B show an alternative example in which the amount of sediment reaching the output arrangement is controlled by adjusting the dimensions of the drum;
Figures 11A and 11B show an alternative example which operates by the same principle as Figures 10A and 10B;
Figure 12 shows an alternative example as a modification to Figure 3;
Figure 13 shows the use of a valve in the design of Figure 12; and
Figures 14A and 14B show the modification of Figure 12 applied to the design of Figures 10A and 10B.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a juicer which comprises a centrifuge drum for generating clear juice and sediment. Output juice is delivered from the centrifuge drum from a radial position which is between the central axis of rotation and the drum outer wall. The output is controllable so that a user-selectable ratio of clear juice and sediment is delivered.

The invention thus makes use of a centrifuge process rather than a filtration process. This makes the juicer easier to clean. The centrifuge process and/or the output of juice from the centrifuge drum is controlled to enable selection of a juice consistency.

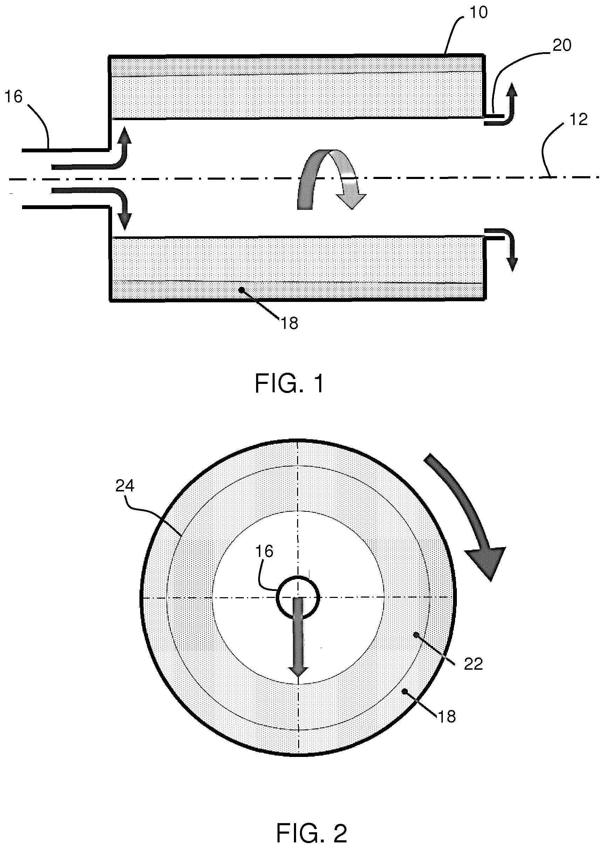

Figure 1 shows a known tubular centrifuge comprising a drum 10 which is rotated about a rotation axis 12. The suspension which is to be separated by the centrifuge process is inserted to an inlet 16 on one side. The heavy solid particles 18 sediment to the cylinder walls due to the centrifugal forces. The fluid exits the tube on the other side via an outlet 20.

The solid particles accumulate at the cylinder wall until the centrifuge is filled with solid particles and the cylinder has to be emptied manually.

Figure 2 shows the drum in cross section perpendicular to the rotation axis, and shows that the sediment 18 collects against the outer wall whereas liquid juice 22 occupies a radially more central location.

The speed of rotation and the duration of the centrifuge process may be used to influence the radial position of the boundary 24 between the solid sediment and the juice. The more sediment that is extracted, the clearer the remaining juice.

One approach implemented by some examples in accordance with the invention is to control the centrifuge process, and then release the resulting juice, leaving behind the sediment.

Another approach implemented by further examples in accordance with the invention is to select a position of an outlet such that a particular ratio of (non-compacted) sediment and clear juice is output from the juicer.

Another approach implemented by further examples in accordance with the invention is to select a drum dimension such that the radial position of the boundary 24 may be adjusted.

These approaches will be described with reference to examples below.

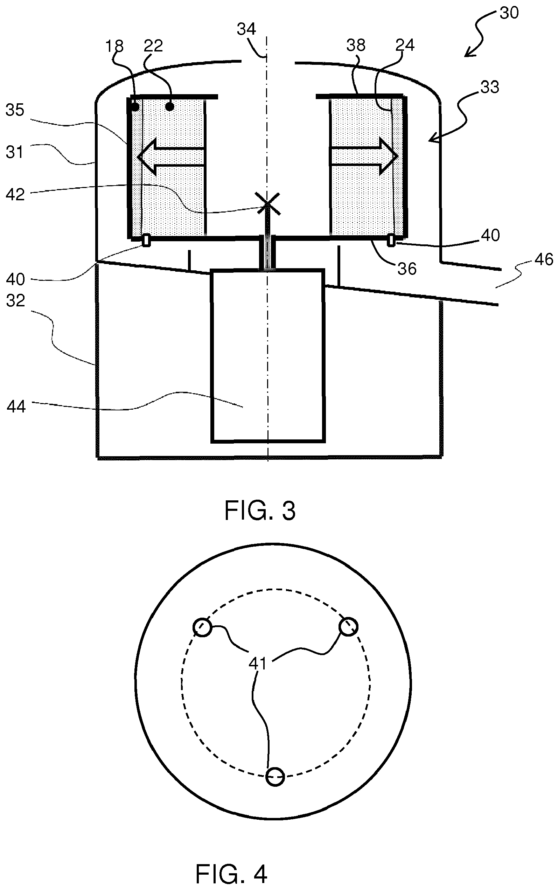

Figure 3 shows a first example of a juicer 30 in accordance with the invention. The juicer has a lid 31 and a base 32.

There is a centrifuge unit 33 in the lid which operates in the manner explained with reference to Figures 1 and 2, although it is mounted to rotate about a vertical axis 34 in use. The centrifuge generates sediment 18 against the outer wall and liquid juice 22 radially closer to the axis 34, with a boundary 24 between the solid sediment and the juice. The centrifuge unit further comprises a radial outer wall 35, a base 36 and a lid 38.

The lid (and/or base) is removable to enable cleaning of the inside of the centrifuge drum.

The centrifuge unit has an output arrangement 40 for delivering output juice from the centrifuge unit which comprises a mixture of clear juice and sediment.

In this example, the output arrangement 40 is provided in the base and has a mixture input (for receiving a mixture of clear juice and pulp) at a radial position which is between the central axis of rotation 34 and the radial outer wall 35. As shown, it is just radially inside the boundary 24 so that juice may be extracted from the output arrangement but not the compacted sediment.

The output arrangement 40 in this example comprises two diametrically opposed outlet openings. As shown in Figure 4, there may be the three outlet openings 41 each at the same radial distance from the axis of rotation.

Returning to Figure 3, the juicer further comprises a rotary cutter 42, comprising a knife or shredder. This is used to perform an initial breaking up of a foodstuff (typically fruit or vegetables) before juice extraction by the centrifuge. The juicer has a motor arrangement 44 for driving the centrifuge unit and the rotary cutter independently.

The cutting and juicing operations may thus be controlled independently, i.e. at different times and/or speeds. Thus, each operation may be optimized.

The output arrangement 40 is controllable to deliver a user-selectable ratio of clear juice and sediment in the output juice. This control may simply relate to a time at which juice is extracted from the output arrangement after a preceding centrifuge operation, and/or it may relate to a selection of settings of the output arrangement as discussed below.

In a first example, the output arrangement is controllable to release juice to an outlet 46 at a time which depends on the user selection of a desired cloudiness level. The juicer provides a controllable juice characteristic, by controlling the centrifuge process before the juice is extracted from the output arrangement. In particular, the duration and/or speed of the centrifuge process is used to determine the consistency of the juice before it is released from the output arrangement 40. The control of the output arrangement may then simply comprise opening the output arrangement. In this way, a user may select a desired level of cloudiness or pulp content of the extracted juice in an easily controlled manner, and the juicer then sets the time at which the output arrangement is actuated.

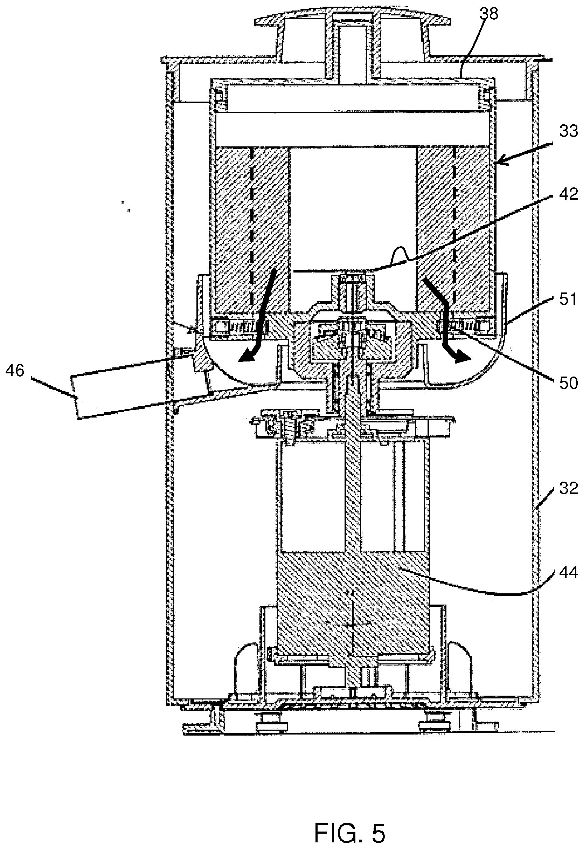

Figure 5 shows a more detailed diagram of the system.

For providing a controlled release, the output arrangement 40 comprises a valve arrangement 50, with a valve for each output opening. The valve arrangement is controlled by centrifugal forces, so that the speed of rotation of the centrifuge unit 33 may be used to provide control of the valve arrangement.

In this way, control signals do not need to be sent to the valve arrangement. Instead, the speed of rotation of the centrifuge is used as a control parameter.

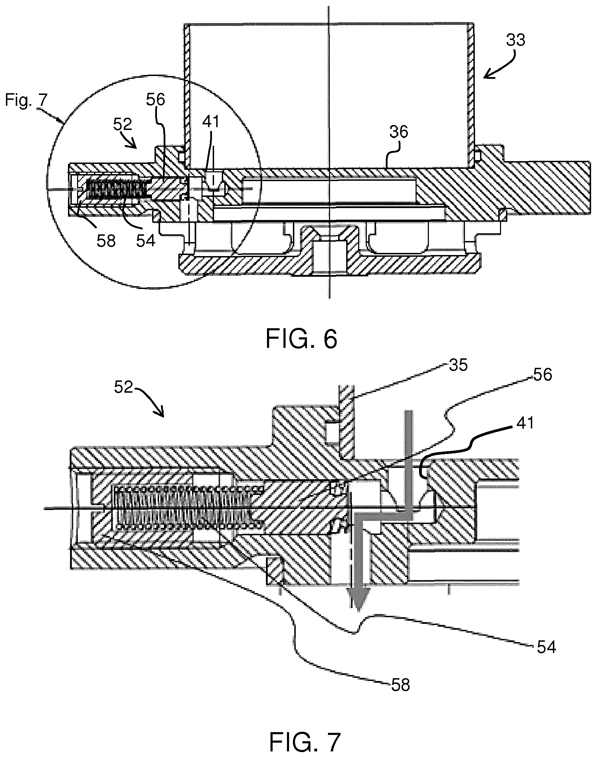

Figure 6 shows an example of the base of the centrifuge unit 33, and shows one outlet 41 in the base 36 of the centrifuge drum (only one outlet is shown for example because there are three outlets as in Figure 4). The outlet 41 is opened and closed by a valve 52 with a radial bias spring 54. The valve seat 56 is biased to close the valve by the spring, and the centrifugal force during rotation above certain threshold angular speed is sufficient to open the valve. An adjustment screw 58 may allow the threshold speed to be set, in that it applies a controllable amount of pre-compression to the spring. This adjustment is however entirely optional and the spring force may instead simply be pre-defined.

The normal centrifuge separation takes place with the valve closed, and after this process, the valve can be opened at a selected time by increasing the centrifuge speed.

Figure 7 shows the valve 51 in enlarged form using the same references as in Figure 6.

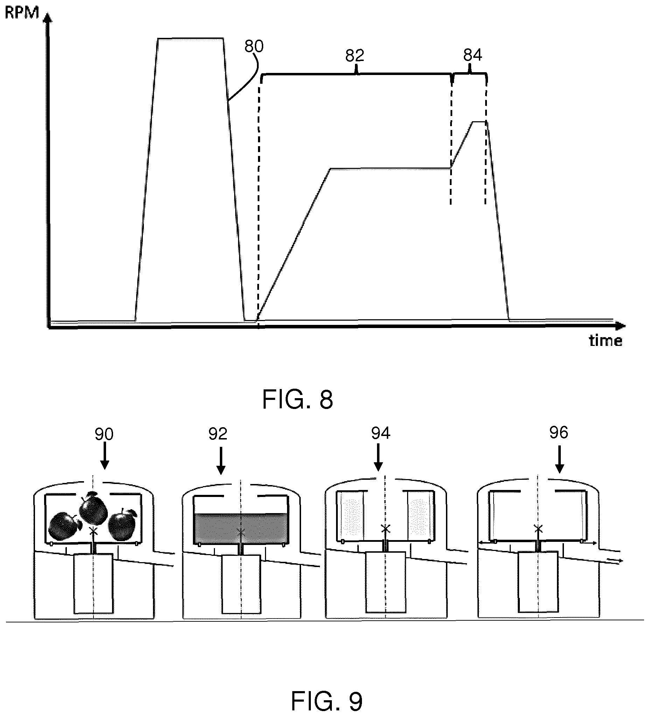

Figure 8 shows how the juicer of Figures 5 to 7 may be operated, and shows the rotational speed versus time.

The first peak 80 relates to operation only of the rotary cutter 42. The rotational speed is selectable independently of the centrifuge speed. The duration of the peak 80 is selected by the user or automatically to achieve a desired consistency for the particular foodstuff being processed.

The time period 82 relates to the sedimentation process carried out by the centrifuge unit. Again, the duration of the period 82 is selected by the user or automatically to achieve a desired centrifugal separation. The rotational speed may also be selectable.

The time period 84 relates to period of increased rotational speed of the centrifuge unit to perform a valve opening function.

Figure 9 shows the overall process in schematic form.

In step 90, the foodstuff is placed in the centrifuge drum.

In step 92, the foodstuff is blended by operating only the rotary cutter.

In step 94, the foodstuff is separated by a centrifuge process by operating only the centrifuge unit.

In step 96, the juice is provided to the outlet, by increasing the centrifuge speed to open the valve arrangement.

In the example above, the output arrangement is in the base of the centrifuge drum. However, the output arrangement may instead be in the lid. The juice is driven through the output arrangement predominantly by the centrifuge operation rather than by gravity, so the output arrangement does not need to be at the bottom of the centrifuge drum. As shown further below, the output arrangement may be in the radial outer wall. All that is required is that the output is drawn from a location which lies between the central axis of rotation and the radial outer wall, so that a mixture of sediment and clear juice is extracted.

The example above is based on controlling the centrifuge operation, and then releasing the separated juice. An alternative is to control the position from which juice is extracted. Thus, for a given centrifuge process, the output consistency may be adjusted by controlling the radial position of the outlet, in particular the radial position of the mixture input from which liquid is drawn to the outlet.

This may be achieved with a set of base or lid plates with different outlet positions. The valve arrangement may be the same so that only a cover plate needs to be selected to set the positions of the outlets 41. Alternatively, the outlets may be slid into different positions.

A further option is to provide a plurality of openings (i.e. mixture inputs) at different radial positions, wherein different openings or combinations of openings are selectable. Openings at different radial positions may be associated with different valves, or identical valves but with different settings (for example by means of the adjustment screw 58).

The different openings may then selected by having outlet valves which are activated at different rotational speeds. In this case, one valve after another may be activated by increasing the rotational speed. Starting at the valve closest to the central axis, higher rotational speeds may be used to open valves progressively closer to the outer wall, and thereby more sediment will be included in the extracted juice. In this way, control of the rotational speed is again used to implement a valve control function, but there can be a multilevel control instead of a binary control of a single valve or set of valves.

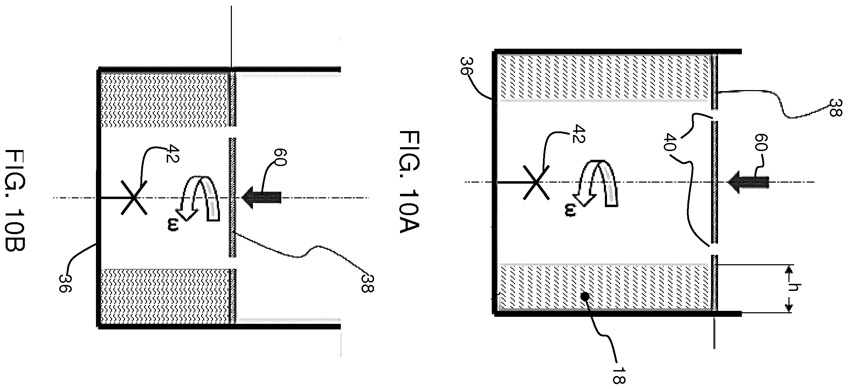

Figures 10A and 10B show a first alternative example in which the amount of sediment reaching the output arrangement is controlled by adjusting the dimensions of the drum. In particular, the distance between the base 36 and the lid 38 is adjustable to provide the control of the ratio of clear juice and sediment. This may be used with a fixed radial position of the output arrangement.

In the example of Figures 10A and 10B, the lid position is adjustable to provide the control of the drum height. Figure 10A shows a first position, in which the lid 38 is at a maximum height. The output arrangement 40 is provided in the lid.

Valves may be provided for the output arrangement, but these are not needed. Without a valve, the foodstuff quantity needs to fit inside the annular rim so no juice is extracted until the lid is pushed down. This could be with a maximum fill level indication on the drum.

After the separation by the centrifuge process, the lid is moved down. The movable lid is sealed at the contact zone with the radially outer wall of the centrifuge drum and is moved parallel to the rotation axis, as shown by arrows 60.

By reducing the effective height of the drum, the liquid level "h" from the radial outer wall towards the central axis of rotation rises until it reaches the output arrangement 40 in the movable lid. Since the sedimentation process has been finished at that point, first only clear juice will pass through the outlet holes.

Depending on how far the lid is pushed down, the thicker (more smoothie like) the final product will become.

Figure 10B shows the end position after the desired juice (and some sediment) has been released from the outlet holes.

The adjustment of the height takes place after the centrifuge (sedimentation) process is complete but with the centrifuge still operating. The degree by which the height of the drum is adjusted thus controls the character of the output juice. The control can also take account of different amounts of ingredient being juiced, in that the user can make adjustment until the desired juice consistency is observed.

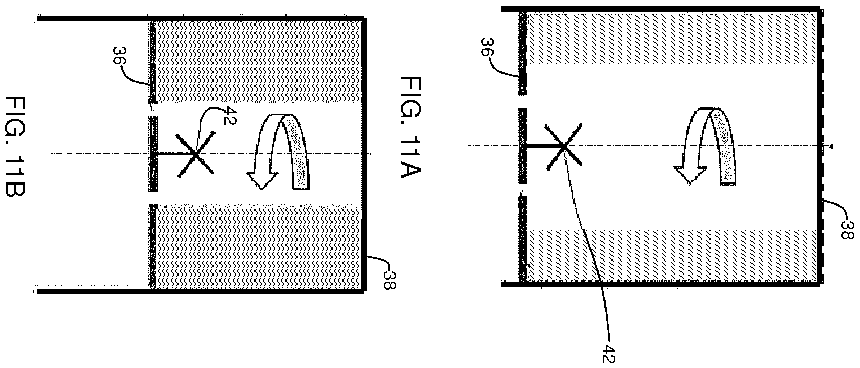

Figures 11A and 11B show a second alternative example which operates by the same principle as Figures 10A and 10B. The amount of sediment reaching the output arrangement is again controlled by adjusting the distance between the base 36 and the lid 38 but the base 36 has the adjustable position.

The examples above make use of an output arrangement in the lid or base of the drum.

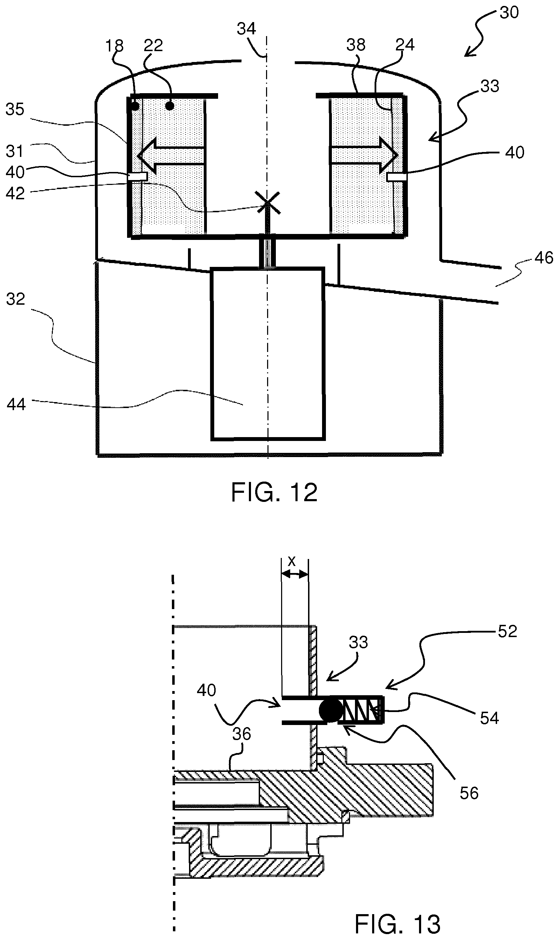

Figure 12 shows a modification to the design of Figure 3 in which a different output arrangement 40 is provided, in particular in the radial outer wall 35 of the drum. However, it projects radially inwardly, so that it has a mixture input which is again located at a radial position between the axis of rotation of the drum and the drum outer wall.

Figure 13 shows that the output arrangement 40 may comprise a centrifugally operated valve 52 of the same type as described with reference to Figures 6 and 7 with a bias spring 54 and valve seat 56. It shows that the mixer input of the output arrangement 40 is offset by a distance x from the radial outer wall, and hence located radially between the axis of rotation and the radial outer wall.

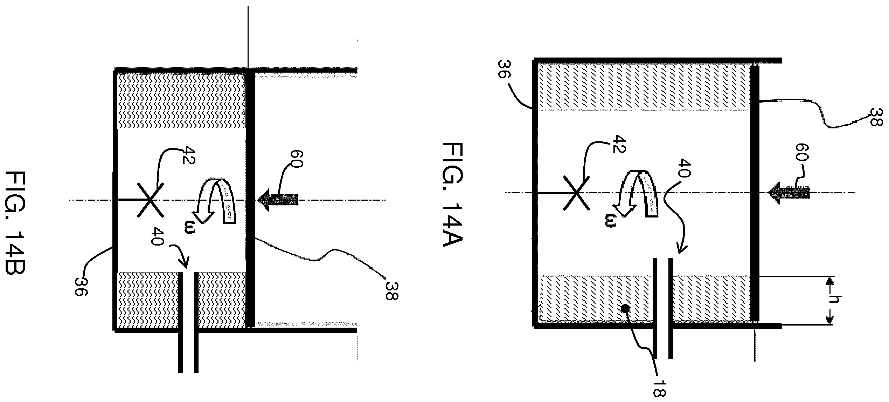

Figures 14A and 14B show this design of output arrangement 40 applied to the design of Figures 10A and 10B. The movable lid (or the movable bottom for a version based on Figures 11A and 11B) does not include the output arrangement. Again, a simple snorkel with or without a control valve is located at the circumferential wall.

The blender function for example operates between 10000 and 25000 rpm under load. The centrifuge operation for example operates between 500 and 5000 rpm. Higher rpm values may not be desired for safety reasons, whereas lower rpm values may give excessively long processing times such as more than 15 minutes.

Preferably, the design enables a processing time to be 1 minute or less for maximum convenience. However, longer processing times are possible, for example up to 15 minutes if the centrifugal force (rpm & dimensions) is reduced for safety reasons.

The invention may be applied to small kitchen appliances, for example for one glass of juice with a drum capacity of approximately 0.5 liters as well as to large devices for entire families with a drum capacity up to 5 liters.

By way of example, the drum diameter may be of the order of 100mm and the drum height may be of the order of 50mm. The dimensions of course depend on the desired volume capacity of the drum.

The different types of output arrangement (on the base or lid, and on the radial outer wall) may be combined.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A juicer, comprising:
a centrifuge unit (33) for generating clear juice (22) and sediment (18) from a foodstuff to be juiced, the centrifuge unit comprising a drum having a central axis of rotation (34), a radial outer wall (35), a base (36) and a lid (38); and
an output arrangement (40) comprising a mixture input at a radial position offset from the outer wall (35),
wherein the output arrangement (40) is controllable to deliver a user-selectable ratio of clear juice and sediment in the output juice.

2. A juicer as claimed in claim 1, further comprising a rotary cutter (42), comprising a knife or shredder.

3. A juicer as claimed in claim 2, comprising a motor arrangement (44) for driving the centrifuge unit and the rotary cutter independently.

4. A juicer as claimed in any one of claims 1 to 3, wherein the drum is adapted to rotate about an upright axis (34) in use.

5. A juicer as claimed in any one of claims 1 to 4, wherein the-output arrangement comprises a valve arrangement (50).

6. A juicer as claimed in claim 5, wherein the valve arrangement is controlled by centrifugal forces, and wherein the speed of rotation of the centrifuge unit (33) is controllable thereby to provide control of the valve arrangement (50).

7. A juicer as claimed in any one of claims 1 to 6, wherein the output arrangement comprises a plurality of mixture inputs (41) at the same radial distance from the axis of rotation (34).

8. A juicer as claimed in any one of claims 1 to 7, wherein the mixture input of the output arrangement has an adjustable radial position.

9. A juicer as claimed in any one of claims 1 to 7, wherein the output arrangement comprises a plurality of mixture inputs at different radial positions, wherein different mixture inputs or combinations of mixture inputs are selectable.

10. A juicer as claimed in any one of claims 1 to 7, wherein the distance between the base (36) and the lid (38) is adjustable to provide the control of the ratio of clear juice and sediment.

11. A juicing method using a juicing appliance, comprising:
(94) performing centrifuging using a centrifuge unit (33) to generate clear juice and sediment from a foodstuff to be juiced, the centrifuge unit comprising a drum having a central axis of rotation, a radial outer wall, a base and a lid; and
(96) delivering output juice from the centrifuge unit which comprises a mixture of clear juice and sediment, wherein the output arrangement has a mixture input which is offset from the radial outer wall,
wherein the method comprises controlling the output arrangement to deliver a user-selectable ratio of clear juice and sediment in the output juice.

12. A method as claimed in claim 11, comprising (92) performing cutting or shredding before performing centrifuging.

13. A method as claimed in claim 11 or 12, wherein controlling the output arrangement comprises controlling a speed of rotation of the centrifuge unit (33), thereby to provide control of a valve which is actuated based on centrifugal forces.

14. A method as claimed in claim 13, comprising operating the centrifuge unit (33) at a first speed to perform a centrifuge function with the valve closed, and then operating the centrifuge unit at a higher second speed to perform a valve opening function and release the output juice.

15. A method as claimed in claim 10, wherein controlling the output arrangement comprises setting a distance between the base and the lid of the centrifuge unit.
